# EUROPEAN PATENT SPECIFICATION

(11) **EP 1 702 368 B1**
(45) Date of publication and mention of the grant of the patent: **19.09.2007**
(21) Application number: 05701807.9
(22) Date of filing: 07.01.2005
(51) Int. Cl.: H01L 41/09

(54) **PIEZOELECTRIC POSITIONER**
PIEZOELEKTRISCHES POSITIONIERUNGSGLIED
POSITIONNEUR PIEZO-ELECTRIQUE

(30) Priority: 08.01.2004 GB 0400342
(43) Date of publication of application: 20.09.2006
(73) Proprietor: Thorlabs, Inc., Newton New Jersey 07860 (US)
(72) Inventor: DIXON, Michael, John, Ash Tree Farm, Little Downham, Ely, Cambridge CB6 2EW (GB); DHESE, Keith, Allen, Milton, Cambridge, Cambridgeshire CB4 6BS (GB)
(74) Representative: Haines, Miles John L.S.
(86) International application number: PCT/GB2005/000037
(87) International publication number: WO 2005/067072

(56) References cited:
- DE-A1- 1 933 205
- US-A- 5 027 027
- PATENT ABSTRACTS OF JAPAN vol. 013, no. 240 (E-767), 6 June 1989 (1989-06-06) -& JP 01 043074 A (CANON INC), 15 February 1989 (1989-02-15)
- PATENT ABSTRACTS OF JAPAN vol. 010, no. 275 (E-438), 18 September 1986 (1986-09-18) & JP 61 095586 A (NEC CORP), 14 May 1986 (1986-05-14)

## Description

### BACKGROUND OF THE INVENTION

The invention relates to piezoelectric positioners, in particular the invention relates to multi-axis piezoelectric positioners.

Positioners are used widely for positioning of optical components, both in production lines and in scientific experiments.

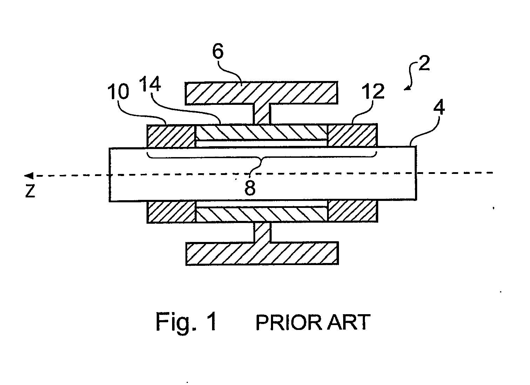

Figure 1 schematically shows in vertical section a known type of linear piezoelectric positioner 2 [1, 2]. This type of positioner is known as an inchworm positioner and is able to position an object in one dimension. The positioner 2 is circularly symmetric about a central axis z and comprises a moveable part 4, a fixed part 6, a drive mechanism 8 and a controller (not shown). The positioner allows for the positioning of the moveable part 4 relative to a fixed part 6 along the z-axis. The drive mechanism 8 comprises a left piezoelectric ring 10, a right piezoelectric ring 12 and a piezoelectric spacer 14. The moveable part 4 comprises a shaft to which an object to be positioned may be attached. The moveable part is gripped by the left 10 and right 12 piezoelectric rings. The piezoelectric rings 10, 12 are arranged such that they may be independently driven by the controller to expand and contract radially about the z-axis so as to sequentially grip and release the moveable part 4. The piezoelectric spacer 14 is arranged such that it may be driven to expand and contract parallel to the z-axis. The left and right piezoelectric rings 10, 12 are fixedly attached to respective left and right ends of the piezoelectric spacer 14. The piezoelectric spacer is fixedly attached at its centre to the fixed part 6.

As shown in Figure 1, the moveable part 4 is held relative to the fixed part 6 by being gripped by the left and right piezoelectric rings 10, 12. To move the moveable part 4 rightwards (i.e. in the negative z-direction) the following sequence is executed by the controller. Firstly, the left piezoelectric ring 10 is expanded such that it no longer grips the moveable part 4. Secondly, the piezoelectric spacer 14 is expanded by an amount ΔZ such that the left piezoelectric ring 10 moves to the left by an amount ΔZ/2 and the right piezoelectric ring 12 moves to the right by the same amount. Because the moveable part 4 is held by the right piezoelectric ring 12 during this action, the moveable part 4 also moves to the right by an amount ΔZ/2 relative to the fixed part 6. Thirdly, the left piezoelectric ring 10 is relaxed and such that the moveable part 4 is again gripped by both piezoelectric rings 10, 12. Fourthly, the right piezoelectric ring 12 is expanded such that it no longer grips the moveable part 4. Fifthly, the piezoelectric spacer 14 is relaxed such that it contracts by an amount ΔZ. This causes the right piezoelectric ring 12 to move to the left by an amount AZ/2 and the left piezoelectric ring 10 to move to the right by an amount ΔZ/2, that is to say the piezoelectric rings 10, 12 return to the axial positions shown in Figure 1 with respect to the fixed part 6. During this action, the moveable part 4 is again moved to the right by an amount ΔZ/2 since it is held by the left piezoelectric ring 10. Finally the right piezoelectric ring 12 is relaxed such that it again grips the moveable part 4.

Following execution of the above sequence, the fixed part 6, the left and right piezoelectric rings 10, 12 and the piezoelectric spacer 14 are in the same relative positions as shown in Figure 1. The moveable part 4, however, has been moved by a amount ΔZ to the right. If further motion is required, the sequence is repeated such that the moveable part 4 is inched rightwards. A leftward motion of the moveable part is achieved using a similar sequence but in which the expansion and contraction cycles of the left and right piezoelectric rings are swapped.

Piezoelectric inchworm positioners of the kind shown in Figure 1 are useful devices since they are able provide accurate and high-resolution one-dimensional positioning and are relatively simple, compact and robust.

However, in may cases, positioning in multiple axes is desired and positioners which are adjustable in two-, three- or more dimensions are required. Multi-axis positioner mechanisms can be divided broadly into two types; those having serial positioner mechanisms, and those having parallel positioner mechanisms.

Serial positioner mechanisms comprise a stacked series of linear positioners. For example, a two-dimensional (2D) serial positioner might comprise first and second linear inchworm positioners of the kind describe above arranged such that the input stage (i.e. the fixed part) of the second linear positioner is mounted on the output stage (i.e. the moveable part) of the first. An object to be positioned is mounted on the output stage of the second positioner. Accordingly, the second positioner operates to move the object in one direction while the first positioner operates to move the second positioner, and hence also the object it carries, in the other direction. Known problems with serial positioners include that their characteristic behavior can be different in the different axes and that the behaviour of one axis can depend on position in the other. This is largely due to differences in the loading of the linear positioners in the stack. For example, in a 2D serial positioner, the second positioner bears the load of the object to be positioned whereas the first positioner bears both this load and that of the second positioner. These problems becomes more significant as more axes of motion are included.

Parallel positioner mechanisms avoid these problems by allowing independent positioning in each of a number of axes. This is achieved by designing drive mechanisms for each axis which operate in parallel with one another. That is to say the input stages associated with each of the different axes of motion are co-mounted and the output stages similarly co-mounted. Parallel positioning mechanisms are generally preferred for accurate multi-axis positioning since they do not suffer from the problems of serial positioner mechanisms outlined above. However, because the drive mechanisms associated with each of the axes in a parallel positioner must be able to accommodate motion in each of the other axes, parallel positioners can be quite bulky and complex.

JP 01 043074 A discloses a positioning device for moving a print head in two dimensions over a surface without using guides. The device comprises a horizontal piezoelectric element supported on three piezoelectric legs. The horizontal piezoelectric element and the piezoelectric legs are driven by an AC signal with appropriate phasing to cause the positioner to walk along a surface.

DE 19 33205 discloses a positioner similar to that shown in Figure 1.

### SUMMARY OF THE INVENTION

According to the invention there is provided a multi-axis piezoelectric positioner comprising: a fixed part; a moveable part positionable in a plane relative to the fixed part, the moveable part comprising a piezoelectric device operable to expand and contract within the plane; and first, second and third releasable clamp mechanisms operable to selectively clamp the moveable part to the fixed part at corresponding first, second and third locations such that the moveable part may be moved within the plane by selected activation of ones of the releasable clamp mechanisms as the piezoelectric device is expanded or contracted, wherein the releasable clamping mechanisms each comprise a piezoelectric actuator operable to apply a clamping force to the moveable part along a direction perpendicular to the plane.

This provides for a relatively simple and robust multi-axis positioner having a parallel mechanism and which benefits from the accurate and high resolution positioning associated with linear piezoelectric positioners.

The piezoelectric device may consist of a single piezoelectric element, for example a planar disc, which is operable to simultaneously expand or contract along multiple directions within the plane. This provides for a simple construction with a relatively small number of parts.

Alternatively, the piezoelectric device may comprise a plurality of piezoelectric elements, for example four piezoelectric elements arranged along the sides of a rectangle. In such an example, a fourth releasable clamp mechanism may be provided with the four releasable clamp mechanisms being arranged to act at corresponding ones of the four corners of the rectangle. This arrangement allows for fully independent positioning along two orthogonal axes in the plane. The four piezoelectric elements may be connected at their ends to form a rectangle or may be connected to one another via corner pieces. The use of passive corner pieces removes interface stresses which might otherwise develop if the piezoelectric elements are connected directly to one another.

The piezoelectric actuators may each comprise a piezoelectric element mounted in a flexure member and arranged such that the piezoelectric element may be driven to expand in a direction substantially parallel to the plane, thus causing the flexure member to contract in a direction substantially perpendicular to the plane and release the clamping force. This arrangement provides for a piezoelectric actuator which applies a clamping force when in a relaxed state and for which the clamping force is released when the piezoelectric element is driven to expand. This can be helpful as piezoelectric elements often have improved operating characteristics when driven to expand compared to when they are driven to contract.

The releasable clamping mechanisms may each further comprise a second piezoelectric actuator configured to cooperate with the first mentioned actuator to move the moveable part relative to the fixed part along a direction perpendicular to the plane while maintaining a clamping force. This provides for a degree of positioning within the range of the actuators along a direction perpendicular to the plane and so provided a simple three-axis positioner.

The moveable part may further comprise a carrier coupled to the piezoelectric device and extending along a direction perpendicular to the plane, the carrier having a mounting face to which an object to be positioned may be attached. This allows an object to be positioned to be supported away from the main body of the positioner and so avoid possible interference between them. The mounting face may include conventional fixings for mounting components, for example, appropriately sized and tapped holes.

In some embodiments, the carrier may comprise a one-axis positioner. This allows an object to be positioned along an axis perpendicular to the plane as well as being positionable parallel to the plane. The carrier may comprise, for example, a conventional inchworm-type positioner to provide a fully piezoelectric three-axis positioner. Alternatively, the carrier may comprise any other type of linear positioner.

In other embodiments, a three-axis positioner is provided whereby the moveable part comprises a second piezoelectric device spaced from the first mentioned piezoelectric device along a direction perpendicular to the plane by an adjustable spacer such that the separation between the first mentioned and second piezoelectric devices is changeable, the carrier being releasably held by the first mentioned and second piezoelectric devices such that it may be moved in a direction perpendicular to the plane by changing the separation of the first mentioned and second piezoelectric devices as the carrier is selectively held and released by the first mentioned and second piezoelectric devices.

The multi-axis piezoelectric positioner may include a controller configured to activate the piezoelectric device or members and the releasable clamping mechanisms in a pre-determined sequence for repositioning the moveable part relative to the fixed part. Alternatively, the controller may be configured to activate the piezoelectric device or members and the releasable clamping mechanisms in response to a feedback signal when positioning the moveable part relative to the fixed part.

### BRIEF DESCRIPTION OF THE DRAWINGS

For a better understanding of the invention and to show how the same may be carried into effect reference is now made by way of example to the accompanying drawings in which:
Figure 1 schematically shows in vertical section view a known one-axis piezoelectric positioner;
Figure 2 schematically shows in perspective view a two-axis piezoelectric positioner according to a first embodiment of the invention;
Figure 3 schematically shows in vertical section view the two-axis piezoelectric positioner of Figure 2;
Figures 4A-F schematically show an example sequence for positioning an object carried by the positioner of Figure 2 in a horizontal plane;
Figure 5 is a table schematically showing the state of several of the elements of the positioner shown in Figure 2 during execution of the sequence shown in Figure 4;
Figure 6 is a table schematically showing the state of several of the elements of the positioner shown in Figure 2 during another example sequence for positioning an object in a horizontal plane;
Figure 7 schematically shows in vertical section view a three-axis piezoelectric positioner according to a second embodiment of the invention;
Figure 8 schematically shows in perspective view a two-axis piezoelectric positioner according to a third embodiment of the invention;
Figure 9 is a table schematically showing the state of several of the elements of the positioner shown in Figure 8 during an example sequence for positioning an object in a horizontal plane;
Figure 10 is a table schematically showing the state of several of the elements of the positioner shown in Figure 8 during another example sequence for positioning an object in a horizontal plane;
Figure 11 schematically shows in perspective view a three-axis piezoelectric positioner according to a fourth embodiment of the invention;
Figure 12 schematically shows in vertical section view the three-axis piezoelectric positioner of Figure 11;
Figure 13 is a table schematically showing the state of several of the elements of the positioner shown in Figure 11 during an example sequence for positioning an object in a horizontal plane;
Figure 14 is a table schematically showing the state of several of the elements of the positioner shown in Figure 11 during an example sequence for positioning an object along a vertical axis; and
Figure 15 schematically shows in vertical section a piezoelectric clamping element that may be used in embodiments of the invention.

### DETAILED DESCRIPTION

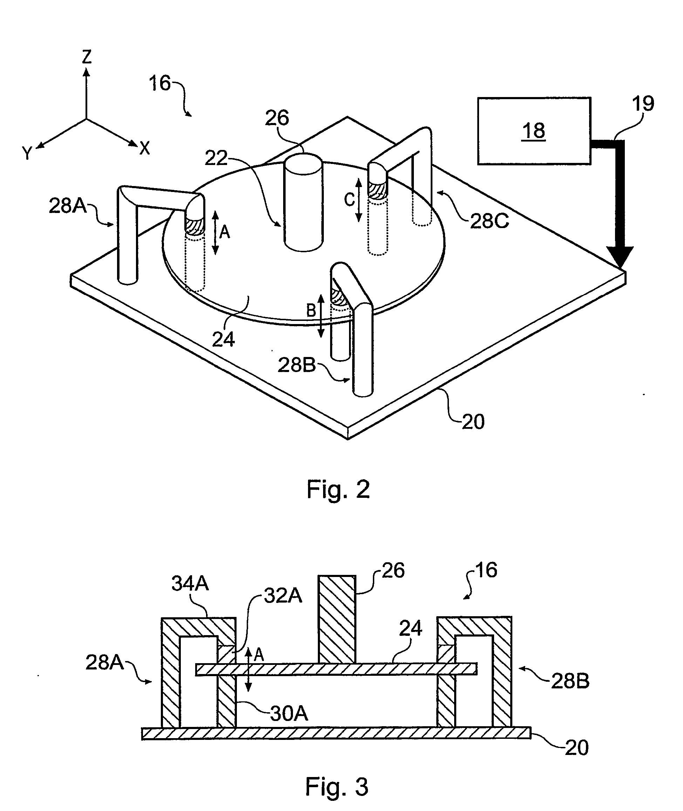

Figure 2 schematically shows in perspective view a piezoelectric positioner 16 for positioning an object, such an optical lens, in two dimensions. In the orientation shown in Figure 2, the positioner 16 is arranged to move an object in a horizontal xy-plane. The piezoelectric positioner comprises a fixed part 20, a moveable part 22 and three releasable clamp mechanisms 28A-C. The positioner is driven by a controller 18 through a signal pathway schematically shown as an arrow 19. In this example, the controller is an appropriately configured general purpose computer. In other examples, an application specific controller may be preferred, such as a field programmable gate array (FPGA) or an application specific integrated chip (ASIC). The fixed part 20 acts as a base which may be attached to an optical table. The moveable part 22 comprises a piezoelectric device in the form of a piezoelectric disc 24 to which a carrier in the form of a mounting post 26 is centrally attached. The piezoelectric disc 24 is arranged such that it may be driven by the controller 18 to expand and contract radially in an xy-plane. The expanding or contracting of a piezoelectric element is often referred to exercising the piezoelectric element. Although not used in this example, in other examples the piezoelectric disc may be pre-stressed, for example by mounting a metal ring about its circumference such that its relaxed in-use size is smaller than its natural size when fully unconstrained. The mounting post 26 serves to provide an upper mounting face for an object to be positioned. The mounting post 26 may comprise a one-axis positioner arranged to provide positioning along an axis perpendicular to the xy-plane. In some cases the mounting post may be dispensed with and the object placed directly onto the piezoelectric disc 24. The three releasable clamp mechanisms 28A-C are disposed at the vertices of an equilateral triangle and configured to provide selective clamping of the piezoelectric disc 24 at first (A), second (B) and third (C) locations under the control of the controller 18. The releasable clamp mechanisms 28A-C are arranged such that when clamped at any of A, B and or C, the part of the piezoelectric disc 24 which is being clamped is prevented from moving in the xy-plane relative to the fixed part.

**Figure 3** schematically shows in vertical section the piezoelectric positioner 16 shown in Figure 2. The section view of Figure 3 is taken in a folded-plane which passes through the releasable clamp mechanism 28A to the centre of the piezoelectric disc 24 and then through the releasable clamp mechanism 28B. This folded section is chosen so as to more readily show how the piezoelectric disc 24 is supported. In this example, the releasable clamp mechanisms 28A, 28B, 28C are identical to one another and only releasable clamp mechanism 28A is described in detail. The releasable clamp mechanism 28A comprises a rigid support 30A, a gantry 34A and a piezoelectric clamping element 32A. The rigid support 30A and the gantry 34A are attached to the fixed part 20. The piezoelectric disc 24 rests on the rigid support and on the corresponding rigid supports associated with each of the other releasable clamp mechanisms. The piezoelectric clamping element 32A is attached to the gantry 34A such that is held over the piezoelectric disc 24A in alignment with the rigid support 30A. The piezoelectric clamping element 32A is arranged such that it may be driven by the controller 18 to expand and contract in a direction perpendicular to the piezoelectric disc 24. In its relaxed state (i.e. non-exercised) the piezoelectric clamping element contacts the piezoelectric disc and so provides a clamping force at location A. When the piezoelectric clamping element 32A is driven by the controller 18 to contract, the clamping force at A is released. To prevent possible damage to the piezoelectric clamping element or the piezoelectric disc, the releasable clamp mechanism 28A may include a degree of resilience, for example, by employing a resilient fixing between the piezoelectric clamping element 32A and the gantry 34A. Although in the positioner shown in Figure 2 the piezoelectric clamping element 32A directly contacts the piezoelectric disc 24, in other examples an intermediate element which is fixed to the piezoelectric clamping element may be employed. Such an intermediate element may be shaped to provide a reduced contact area with the disc and may be formed from a material which provides increased friction between the releasable clamp mechanism and the disc.

It will be understood that many other releasable clamp mechanisms may be employed, e.g. those employing hydraulic means, pneumatic means or other forms of actuator.

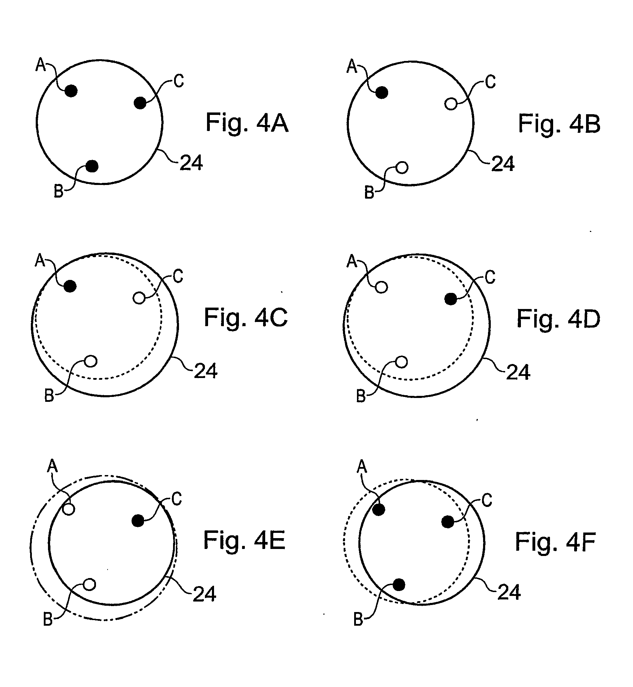

Figures 4A-F schematically show one example of a sequence of steps for moving the piezoelectric disc 24 (and hence the mounting post 26) in the xy-plane. In executing this example sequence, the mounting post is moved in a direction substantially parallel to an imaginary line connecting locations A and C and in a direction from A towards C. Each of the Figures 4A-F schematically shows a plan view of the piezoelectric disc 24 and the locations A, B, C where it may be clamped. In this embodiment these location are fixed relative to the fixed part 20 such that motion of the piezoelectric disc with respect to the locations A, B, C indicates motion of the piezoelectric disc with respect to the fixed part. The locations A, B, C are schematically shown as circles. A closed circle indicates that releasable clamp mechanism is configured to clamp the piezoelectric disc at that location. An open circle indicates that the piezoelectric disc is not clamped at that location, and so free to move in the xy-plane.

Figure 4A shows an initial position for the piezoelectric disc 24 with respect to locations A, B, C. In this example initial state the piezoelectric disc is relaxed (i.e. not expanded or contracted about its normal in-use size), and centred with respect to the three locations A, B, C. The releasable clamp mechanisms 28A, 28B, 28C are all acting to clamp the piezoelectric disc at the corresponding locations A, B, C. This initial position is referred to as step S1 of the sequence. In a second step S2, schematically shown in Figure 4B, the piezoelectric disc 24 is released at B and C (i.e. releasable clamp mechanisms 28B, 28C are activated by the controller 18 to remove their clamping force from the piezoelectric disc 24). In a third step S3, schematically shown in Figure 4C, the piezoelectric disc is expanded. This is apparent in Figure 4C from the change in circumference of the piezoelectric disc 24. The outline of the piezoelectric disc as positioned in steps S 1 and S2 is shown as a broken line for comparison. The expansion of the piezoelectric disc while it is clamped at A causes it to expand asymmetrically about its unexpanded position such that its centre moves away from location A. In a fourth step S4, schematically shown in Figure 4D, the piezoelectric disc remains expanded while the releasable clamp mechanism at location C is configured to clamp the piezoelectric disc and the releasable clamp mechanism at location A subsequently released. By clamping the piezoelectric disc at location C before releasing the clamp at location A, the disc remains clamped at one or other location throughout this step. In a fifth step S5, schematically shown in Figure 4E, the piezoelectric disc 24 is relaxed such that it contracts to its initial size. This is shown in Figure 4E by the change in circumference of the piezoelectric disc. The outline of the piezoelectric disc as positioned in steps S3 and S4 is shown as a broken line for comparison. The contraction of the piezoelectric disc while clamped at location C causes it to contract asymmetrically from its expanded position such that its centre moves towards location C. In a sixth step S6, schematically shown in Figure 4F, the releasable clamp mechanisms associated with locations A and C are configured to clamp the piezoelectric disc such that the disc is clamped at all three locations. At this stage the sequence is complete, the piezoelectric disc having being moved in a direction substantially parallel a line connecting locations A and C. The original position of the piezoelectric disc shown in Figure 4A is schematically shown in Figure 4F as a broken line for comparison.

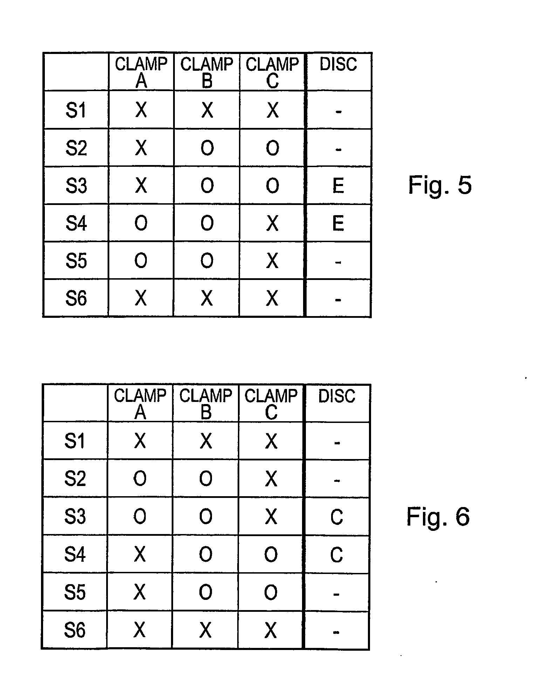

Figure 5 is a table which provides a convenient way of indicating the state of each of the releasable clamp mechanisms 28A-C and the piezoelectric disc 24 during the movement sequence shown in Figures 4A-F. In each of the steps S1-S6, the state of the releasable clamp mechanisms at the locations A, B and C is shown as an 'X' symbol if that particular releasable clamp mechanism is configured to clamp the piezoelectric disc and as an 'O' symbol if that particular releasable clamp mechanism is released. The state of the piezoelectric disc 24 is shown as a '-' symbol to indicate that the piezoelectric disc is in a relaxed state and as an 'E' symbol to indicate that the piezoelectric disc is in an expanded state.

Figure 6 shows a table which is similar to that of Figure 5 but which describes an alternative sequence of steps for achieving a similar motion to that seen in Figures 4A-F. The sequence shown in Figure 6 differs from that of Figure 5 in that the piezoelectric disc is driven to contract at step S3, rather than to expand, and a different activating sequence for the releasable clamp mechanisms is employed. Contraction of the piezoelectric disc 24 is indicated in the table by a "C" symbol. In the sequence shown in Figure 5, the piezoelectric disc expands to push itself away from A and then relaxes to pull itself towards C, whereas in the sequence of Figure 6 the piezoelectric disc contracts to pull itself towards C and then relaxes to push itself away from A. It will be appreciated that the piezoelectric disc may preferentially expand about its relaxed state rather than contract. For this reason, although the sequence shown in Figure 6 is possible, that of Figure 5, which relies on expansion of the piezoelectric disc may be preferred.

The amount by which the piezoelectric disc is moved during such sequences is determined by the magnitude of the expansion or contraction of the piezoelectric disc. Multiple sequences can be executed in series to successively move the piezoelectric disc in a chosen direction by distances greater than is possible in a single sequence. This can be done by repeating either of the sequences shown in Figures 5 or 6, for example, or by executing a modified sequence which employs both expansion and contraction of the piezoelectric disc to increase the distance traveled in a single sequence. An example sequence employing this technique might comprise a concatenation of the sequences shown in Figure 5 and Figure 6, but with steps S5 and S6 from Figure 5 and steps S1 and S2 from Figure 6 missing such that the controller 18 configures the positioner to adopt the state shown in step S3 of Figure 6 directly after executing step S4 of Figure 5. Depending on the piezoelectric poling of the piezoelectric disc, it may not be possible to use the same amplitude of contraction as of expansion.

The piezoelectric disc can be moved in directions substantially parallel to any line connecting any pair of the locations A, B and C. Different amounts of motion along different ones of these directions can be made in series to provide motion of the mounting post 26 to a desired position within the range of travel of the positioner. It will be appreciated that in general when executing multiple sequences it will not be necessary to clamp the piezoelectric disc at all clamp locations at the end of each individual sequence. Although there is no fundamental limit to the range of motion which a positioner of the kind shown in Figure 1 can provide, in general a typical device will have a characteristic size of between around 1 and 10 cm and provide a range of motion of around 10µm to 1mm with a resolution of around 10 to 100 nm and be capable of positioning a load of perhaps around 10 N.

As noted above, in the sequences of Figures 5 and 6 the net motion of the centre of the piezoelectric disc 24 is largely parallel to a line connecting A and C. However, the motion will not generally be exactly parallel to this line. This is because the direction of motion has a small dependence on the initial position of the piezoelectric disc and the magnitude of its expansion and/or contraction. Because of this, in some embodiments the positioner will include a feedback mechanism to assist with positioning. For example, in one application the positioner might be used in a system for aligning an optical fibre with another component, such as another optical fibre. In such a case, rather than direct the positioner to an absolute position, the controller 18 may drive the positioner using conventional feedback techniques to maximize the light coupled from one fibre to the other. More generally, feedback mechanisms can be used for positioning the moveable part relative to the fixed part based on any parameter which depends on the position of the moveable part.

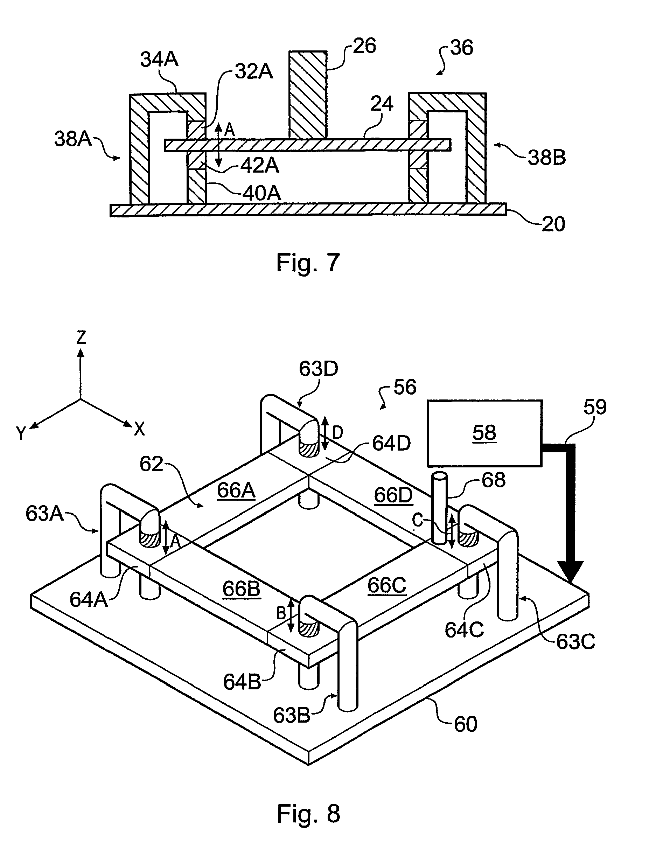

Figure 7 schematically shows in vertical section a piezoelectric positioner 36 according to a second embodiment of the invention. Parts of the positioner 36 which are similar to parts of the positioner of the first embodiment are identified by the same reference numerals. These parts will be understood from the corresponding parts of the first embodiment and are not described here further. The positioner of Figure 7 differs from that of Figure 2 in the design of its releasable clamp mechanisms. The section view of Figure 7 is taken in a folded-plane which is similar to that of Figure 3 and which passes through one releasable clamp mechanism 38A to the centre of the piezoelectric disc 24 and then through another releasable clamp mechanism 38B. In this example, the releasable clamp mechanisms 38A, 38B (and a further one not shown) are identical to one another and only releasable clamp mechanism 38A is described in detail. In place of the rigid support 30A of the releasable clamp mechanism 28A seen in Figure 3, the releasable clamp mechanism 38A of Figure 7 employs a rigid support 40A onto which a piezoelectric support element 42A is mounted. The remainder of the releasable clamp mechanism 38A is similar to and will be understood from the corresponding parts of the releasable clamp mechanism 28A of Figure 3. The piezoelectric support element 42A is arranged such that it may be driven by the controller 18 to expand and contract in a direction perpendicular to the piezoelectric disc 24.

An object supported by the positioner 36 of Figure 7 may be moved within a plane in the same manner as described above for the first embodiment. During this motion the piezoelectric support elements associated with each of the releasable clamp mechanisms remain passive. Once a desired position is reached, however, the piezoelectric support elements and the piezoelectric clamping elements associated with each of the releasable clamp mechanisms can be co-operatively driven to raise or lower the piezoelectric disc 24. This can be achieved while maintaining a clamping force on the piezoelectric disc. For example, by expanding all of the piezoelectric support elements by an amount Ah and contracting all of the piezoelectric clamping elements by the same amount, the piezoelectric disc is raised by Δh. The positioner of Figure 7 therefore provides for motion along the z-axis as well as in the xy-plane. By applying different expansions and/or contractions to different ones of the releasable clamp mechanism, a degree of tilt can also be introduced. If large amounts of tilt are desired, a degree of flexure may be incorporated into the releasable clamping mechanisms to accommodate the tilt while maintaining a clamping force.

Figure 8 schematically shows in perspective view a piezoelectric positioner 56 according to a third embodiment of the invention. The piezoelectric positioner comprises a fixed part 60, a moveable part 62 and four releasable clamp mechanisms 63A-D. The positioner is driven by a controller 58 through a signal pathway schematically shown as an arrow 59. The fixed part 60 forms a base which may be attached to an optical table, for example. The moveable part 62 comprises a piezoelectric device in the form of four passive corner pieces 64A-D which are connected by four piezoelectric positioning elements 66A-D. A mounting post 68 is attached to one of the corner pieces 64C. The piezoelectric positioning elements 66A-D are arranged such each may be independently driven by the controller 18 to expand and contract along its length so as to increase or decrease the separation of the corner pieces to which it is attached. The piezoelectric positioning elements 66A-D may be driven individually or together. A first pair of releasable clamp mechanisms 66B, 66D are arranged parallel to the x-axis and a second pair 66A, 66C are arranged parallel to the y-axis. The mounting post 68 serves to provide an upper mounting face on which an object to be positioned may be placed. The four releasable clamp mechanisms 63A-D are disposed at the corners of a square and configured to provide selective clamping of the corner pieces 64A-D at corresponding first (A), second (B), third (C) and fourth (D) locations under the control of the controller 58. Each of the releasable clamp mechanisms 63A-D of Figure 8 is similar to and will be understood from the releasable clamp mechanisms of the first embodiment of the invention. Clamping mechanisms similar to those of the second embodiment may also be used.

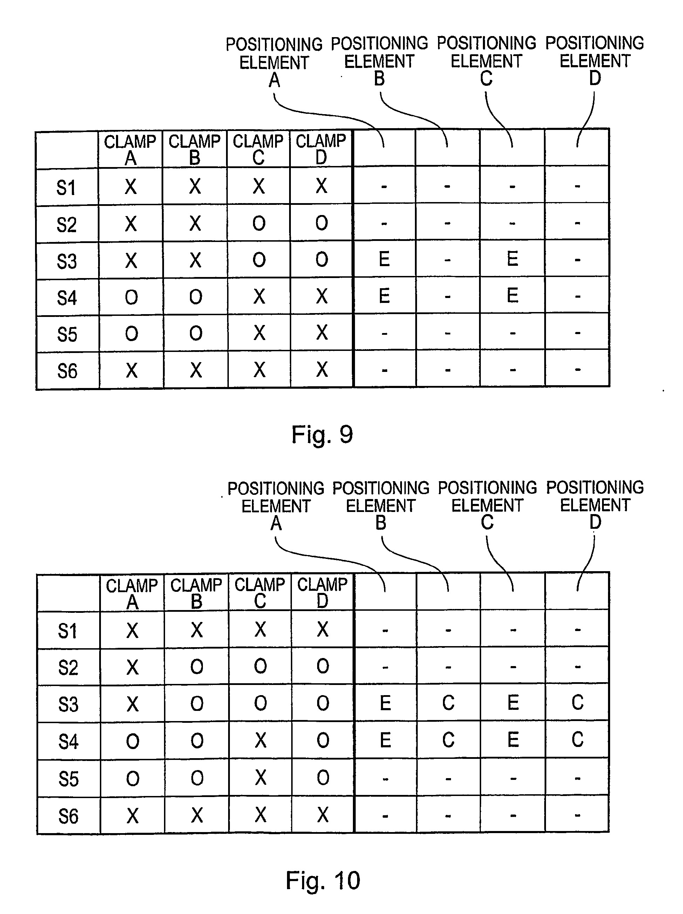

Figure 9 is a table showing the state of each of the four clamp mechanisms 63A-D and the four piezoelectric positioning elements 66A-D during an example sequence for moving the mounting post 68 relative to the fixed part 60 in a direction parallel to the y-axis. This table is similar to and will be understood from the tables of Figures 5 and 6.

In step S1, the piezoelectric positioner 36 is in an initial state with all four clamp mechanisms 63A-D holding their respective corner pieces 64A-D at respective locations A, B, C and D and all four piezoelectric positioning elements 66A-D are relaxed. In step S2, the corner pieces 64C, 64D are released at C and D (i.e. releasable clamp mechanisms 63C, 63D are activated by the controller 58 to remove their clamping force from their corner pieces). In step S3 the piezoelectric positioning elements 66A, 66C which are aligned with the y-axis are expanded by an amount ΔY. This moves the mounting post 68 by a corresponding amount. In step S4, the piezoelectric positioning elements 66A, 66C remains expanded while the releasable clamp mechanisms at locations C and D are configured to clamp their respective corner pieces and the releasable clamp mechanisms at locations A and B subsequently released. In step S5, the piezoelectric positioning elements 66A, 66C are relaxed such that they contract to their initial size. In step S6, the releasable clamp mechanisms associated all four locations A-D are configured to clamp their respective corner pieces 64A-D. At this stage the sequence is complete, the mounting post 68 having being moved by an amount ΔY in a direction parallel to the y-axis. Multiple sequences can be executed to move the mounting post by distances greater than ΔY. Smaller distances can be achieved by expanding the piezoelectric positioning elements by a correspondingly smaller amount in steps S3 and S4 of the sequence shown in Figure 9. It will be appreciated that motion parallel to the x-axis can be achieved using a similar sequence.

Figure 10 is a table showing the state of each of the four clamp mechanisms 63A-D and the four piezoelectric positioning elements 66A-D during an example sequence for moving the mounting post 68 relative to the fixed part 60 in a direction which is not parallel to either the x- or y-axes. In this example the mounting post is moved in a direction parallel to an imaginary line connecting between locations B and D. This table is similar to and will be understood from the tables of Figure 5, 6 and 9 and will not be described further in detail.

Although the amounts of expansion and/or contraction of the pair of piezoelectric positioning elements 66B, 66D aligned with the x-axis and the pair 66A, 66C aligned with the y-axis could be the same to provide a motion step at 45° to the x- and y- axes, they may also be different to provide a motion step in an arbitrary direction in the xy-plane.

A degree of angular motion of the moveable part relative to the fixed part about an axis perpendicular to the xy-plane may be achieved by expanding the piezoelectric positioning elements 66A-D by different amounts. To avoid unduly stressing the piezoelectric positioning elements during this action, a flexure joint where each piezoelectric positioning element joins a corner piece may be included. The flexure joints may, for example, comprise pin joints configured such that the piezoelectric positioning elements can rotate in the xy-plane about the pin joint.

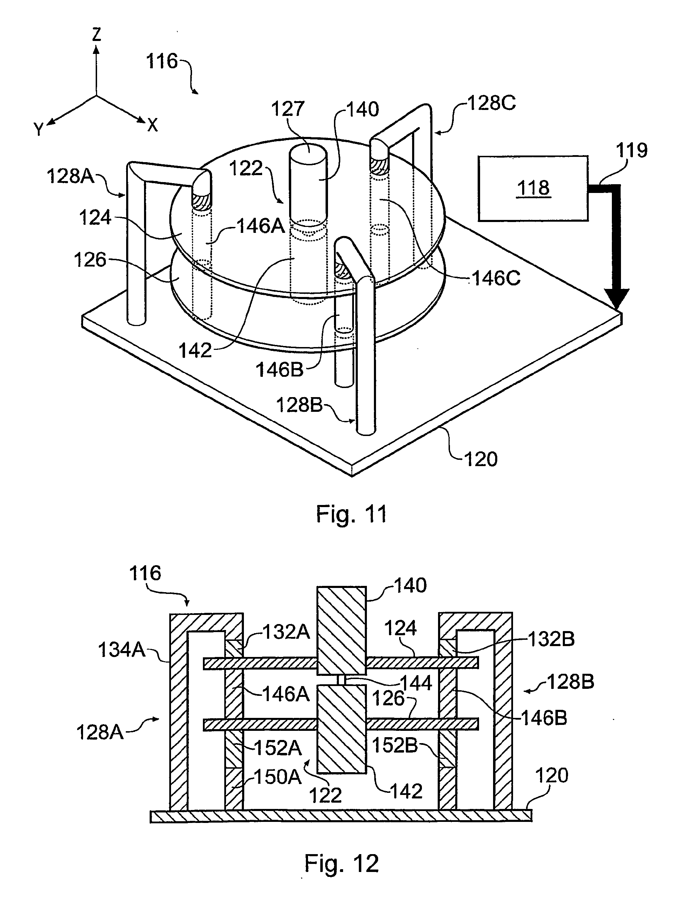

Figure 11 schematically shows in perspective view a three-axis piezoelectric positioner 116 for positioning an object in three dimensions. In the orientation shown in Figure 11, the positioner 116 is arranged to move an object in a horizontal xy-plane and/or along a vertical z-axis which is perpendicular to the horizontal plane. The piezoelectric positioner 116 comprises a fixed part 120, a moveable part 122 and three releasable clamp mechanisms 128A-C. The positioner is driven by a controller 118 through a signal pathway schematically shown as an arrow 119. The moveable part 122 comprises an upper piezoelectric ring 124 and a lower piezoelectric ring 126. These rings are separated by three piezoelectric spacer elements 146A-C. The piezoelectric rings 124, 126 are arranged such that they may be independently driven by the controller 118 to expand and contract radially in an xy-plane. The piezoelectric spacer elements 146A-C are arranged such that they may be driven by the controller 118 to expand and contract parallel to the z-axis so as to increase or decrease the separation between the piezoelectric rings 124, 126. A cylindrical piezoelectric mounting post 127 passes through the openings in the two piezoelectric rings 124, 126. The piezoelectric mounting post 127 comprises an upper piezoelectric mounting post element 140 and a lower piezoelectric mounting post element 142. These two piezoelectric mounting post elements are connected together by a centrally located fixing 144. The upper and lower piezoelectric mounting post elements are arranged such that they may be independently driven by the controller 18 to expand and contract radially in an xy-plane. The centrally located fixing 144 allows for relative expansion/contraction between the upper and lower piezoelectric mounting post elements 140, 142 without unduly stressing their interface. In normal use, that is when not being repositioned, the mounting post elements are appropriately expanded by an amount δE such that they are friction gripped within the opening of their respective piezoelectric ring. The three releasable clamp mechanisms 128A-C are disposed at the vertices of an equilateral triangle and configured to provide selective clamping of the moveable part 122 at first (A), second (B) and third (C) locations under the control of the controller 118. The clamping acts between the upper face of the upper piezoelectric ring 124 and the lower face of the lower piezoelectric ring 126. The piezoelectric spacer elements 146A-C are positioned generally in-line with the clamping locations A, B, C to reduce possible flexure of the piezoelectric rings 124, 126 when a clamping force is applied by the releasable clamp mechanisms 128A-C. However, they may be otherwise positioned.

Figure 12 schematically shows in vertical section the piezoelectric positioner 116 shown in Figure 11. The section view of Figure 12 is taken in a folded-plane which passes through the releasable clamp mechanism 128A to the centre of the moveable part 122 and then through the releasable clamp mechanism 128B. The releasable clamp mechanisms 128A, 128B, 128C are identical to one another and only releasable clamp mechanism 128A is described here. The releasable clamp mechanism 128A comprises a gantry 134A, a piezoelectric clamping element 132A, a rigid support 150A and a piezoelectric support element 152A. The rigid support 150A and the gantry 134A are attached to the fixed part 120. The moveable part 122 rests on the piezoelectric support element 152A which in turn is mounted on the rigid support 150A. The piezoelectric clamping element 132A is attached to the gantry 34A such that is held over the upper piezoelectric ring 124 of the moveable part 122 in vertical alignment with the piezoelectric support element 152A. The piezoelectric clamping element 132A and the piezoelectric support element are arranged such that they may be independently driven by the controller 118 to expand and contract parallel to the z-axis. In its relaxed state the piezoelectric clamping element 132A contacts the upper piezoelectric ring 124 of the moveable part 122 and so provides a clamping force at location A. When the piezoelectric clamping element 132A is driven by the controller 118 to contract, the clamping force at A is released.

Although the releasable clamp mechanism 128A is arranged to apply a clamping force between the upper face of the upper piezoelectric ring 124 and the lower face of the lower piezoelectric ring 126, rather than between the upper and lower faces of the single piezoelectric disc 24 of Figure 7, it will be appreciated that the releasable clamp mechanisms 128A is otherwise able to function in the generally same manner as the releasable clamp mechanisms 38A-C of Figure 7.

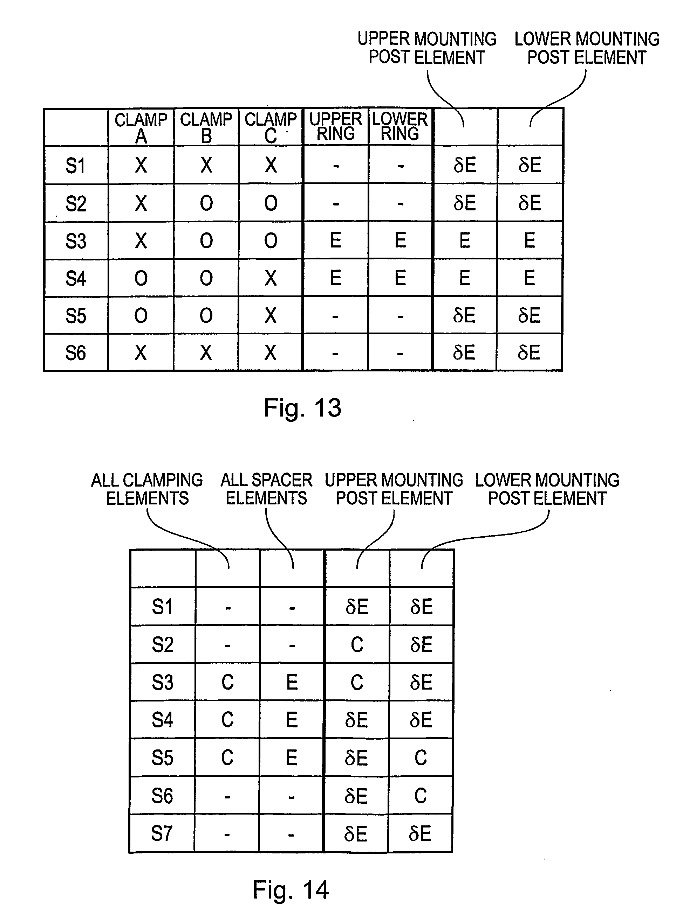

Figure 13 is a table showing the state of each of the three releasable clamp mechanisms 128A-C, the upper and lower piezoelectric rings 124, 126 and the upper and lower piezoelectric mounting post elements 140, 142 during an example sequence for moving the piezoelectric mounting post 127 relative to the fixed part 120 in an xy-plane. The piezoelectric support elements 152A-C and piezoelectric spacer elements 146A-C remain passive during this motion. In executing this example sequence the piezoelectric mounting post 127 is moved in a direction substantially parallel to an imaginary line connecting locations A and C and in a direction from A towards C. This table is similar to and will be understood from the tables of Figure 5, 6, 9 and 10. However, an additional state is included. This is identified by a "δE" symbol and indicates when the upper and lower piezoelectric mounting post elements 140, 142 are in their normal operating state - i.e. slightly expanded so as to be gripped by the piezoelectric rings 124, 126.

The sequence shown in Figure 13 corresponds closely to that shown in Figure 5 and operates to move the moveable part 122 in a broadly similar manner. Accordingly, the operational sequences for the releasable clamp mechanisms 128A-C in the sequence of Figure 13 correspond to the sequence shown in Figures 4 and 5 and will not be described here further. The main differences between the sequence shown in Figure 13 and that shown in Figure 5 is that the upper and lower piezoelectric rings 124, 126 are expanded (or contracted) simultaneously in steps S3 and S4 of Figure 13, whereas in the embodiment of Figure 5 there is only one piezoelectric disc 24 to be exercised. To prevent the mounting post 127 dropping through the openings in the piezoelectric rings 124, 126 when they are expanded, the upper and lower piezoelectric mounting post elements are also expanded in steps S3 and S4 of Figure 13 to maintain their friction grip. In variants of the sequence shown in Figure 13 which employ contraction of the piezoelectric rings 124, 126 (for example in a sequence broadly corresponding to that of Figure 6) the upper and lower piezoelectric mounting post elements can be appropriately contracted when the piezoelectric rings are contracted:

Figure 14 is a table showing the state of each of the three piezoelectric clamping elements 132A-C, the three piezoelectric spacer elements 146A-C and the upper and lower piezoelectric mounting post elements 142, 140 during an example sequence for moving the piezoelectric mounting post 127 relative to the fixed part 120 in a direction parallel to the z-axis. During this motion, the three piezoelectric clamping elements 132A-C are all activated according to the same sequence and so only a single column is included in the table. The same is true for the three piezoelectric spacer elements 146A-C. The piezoelectric rings 124, 126 and the piezoelectric support elements 150A-C remain passive during this sequence. In executing this example sequence the piezoelectric mounting post 127 is moved downwards by an amount ΔZ. This table is similar to the tables of Figure 5, 6, 9 and 10 and uses a similar notation. One difference between the tables is that Figure 14 shows the state of the piezoelectric clamping elements as either relaxed, contracted or expanded. This is in contrast to the earlier tables which show the functional state of the releasable clamp mechanisms (i.e. clamped or released), rather than the state of the actual piezoelectric clamping elements. This is because the releasable clamp mechanisms 128A-C provide a consistent vertical clamping force on the moveable 122 part throughout the sequence shown in Figure 14.

Step S1 of Figure 14 corresponds to an initial state of the positioner 116. The piezoelectric clamping elements 132A-C and the piezoelectric spacer elements 146A-C are all relaxed. The upper and lower piezoelectric mounting post elements 140, 142 are slightly expanded so as to provide a friction-grip fit within the respective openings in the piezoelectric rings 124, 126, as described above. In step S2, the upper piezoelectric mounting post element 140 is contracted such that the mounting post 127 formed of the upper and lower piezoelectric mounting post elements is supported only by the lower piezoelectric ring 126. In step S3, the piezoelectric clamping elements 132A-C are all contracted by an amount ΔZ while at the same time the piezoelectric spacer elements 146A-C are expanded by the same amount. This has the effect of maintaining a vertical clamping force which prevents motion of the moveable part 122 in the xy-plane but raises the upper piezoelectric ring 124 relative to the fixed part 120 by an amount ΔZ. In step S4, the upper piezoelectric mounting post element is returned to its slightly expanded state such that it is again friction gripped by the upper piezoelectric ring. In step S5, the lower piezoelectric mounting post element 142 is contracted such that the mounting post 127 is now supported only by the upper piezoelectric ring 124. In step S6, the piezoelectric clamping elements 132A-C and the piezoelectric spacer elements 146A-C are returned to their relaxed states. This has the effect of lowering the upper piezoelectric ring 124 relative to the fixed part 120 by an amount ΔZ while maintaining a vertical clamping force on the moveable part 122. Because the mounting post 127 is supported by the upper piezoelectric ring and free to move within the opening in the lower piezoelectric ring, the mounting post 127 is also lowered by an amount ΔZ during this operation. In step S7, the lower piezoelectric mounting post element 142 is returned to its slightly expanded state such that it is again gripped by the lower piezoelectric ring. This is the end of the sequence. The mounting post 127 has been move downwards by an amount ΔZ while the other components are returned to their initial positions. Multiple sequences and sequences of different amplitude (i.e. different ΔZ) can be executed to provide a larger range of movements. It will be appreciated that many other sequences may be executed, for example to achieve an upward motion. Sequences may also be employed which include contraction and/or expansion of the piezoelectric support elements in combination to provide an increased range of motion per sequence execution.

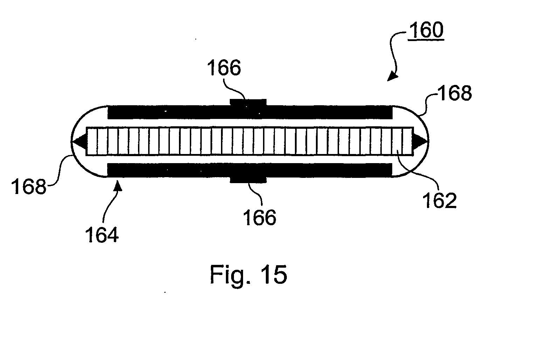

Figure 15 schematically shows in vertical section a piezoelectric clamping element 160 that may be used as an alternative to the piezoelectric clamping element 32A shown in Figure 3. The piezoelectric clamping element 160 comprises a piezoelectric stack 162 positioned within a flexure structure 164. In this example, the flexure structure comprises a pair of relatively stiff connecting beams 166 which are connected at their ends by flexure parts 168. The flexure structure 164 may be a unitary or a component structure. The piezoelectric stack 162 is mounted between the flexure parts 168 and arranged such that it may be driven by a controller, e.g. the controller 18 shown in Figure 2, to expand and contract in a direction which is horizontal (for the orientation shown in Figure 15). As the piezoelectric stack 162 expands horizontally, the connecting beams 166 are brought together due to the flexure of the flexure parts 168. Similarly, as the piezoelectric stack 162 contracts, the connecting beams move apart from one another. Accordingly, the piezoelectric clamping element 160 can be configured to apply a vertical clamping force between a gantry and a piezoelectric disc (e.g. the gantry 34A and piezoelectric disc 24 shown in Figure 3 where the piezoelectric clamping element 160 replaces that shown in Figure 3) when in a relaxed state, and to release this force when the piezoelectric stack 162 is driven to expand.

By using the arrangement shown in Figure 15, the piezoelectric clamping element 160 can apply a clamping force when relaxed (so no power supply is needed) and also functions to release this force when the piezoelectric stack is driven to expand (which is generally more efficient than contraction for piezoelectric stacks). The arrangement essentially reverses the operation of the piezoelectric stack 162 so that its expansion creates a contraction of the flexure structure 164 in a direction perpendicular to the piezoelectric stack expansion (i.e. vertical in Figure 15). This direction is the clamping direction. Mechanical amplification may be achieved by appropriate selection of shape for the flexure parts. With semi-circular parts, as shown in Figure 15, the mechanical amplification is close to unity.

It will be appreciated that devices of the kind shown in Figure 15 may equally be used in place of other ones of the piezoelectric elements associated with the releasable clamping mechanisms, for example, the piezoelectric support element 42A shown in Figure 7 and/or the piezoelectric spacer elements 146A shown in Figure 12 may comprise similar devices.

### REFERENCES

[1] US 3 902 084 (Burleigh Instruments Inc.)
[2] US 3 902 085 (Burleigh Instruments Inc.)

## Claims

1. A multi-axis piezoelectric positioner (16, 56,116) comprising:
a fixed part (20, 60, 120);
a moveable part (22, 62, 122) positionable in a plane relative to the fixed part, the moveable part comprising a piezoelectric device (24, 66, 124; 126) operable to expand and contract within the plane; and
first, second and third releasable clamp mechanisms (28A-C, 63A-C, 128A-C) operable to selectively clamp the moveable part to the fixed part at corresponding first, second and third locations (A, B, C) such that the moveable part may be moved within the plane by selected activation of ones of the releasable clamp mechanisms as the piezoelectric device is expanded or contracted, wherein the releasable clamping mechanisms each comprise a piezoelectric actuator (32A, 42A, 132A; 146A; 152A) operable to apply a clamping force to the moveable part along a direction perpendicular to the plane.

2. A multi-axis piezoelectric positioner according to claim 1, wherein the piezoelectric device consists of a single piezoelectric element.

3. A multi-axis piezoelectric positioner according to claim 1, wherein the piezoelectric device comprises a plurality of piezoelectric elements.

4. A multi-axis piezoelectric positioner according to claim 1, wherein the piezoelectric device comprises four piezoelectric elements arranged to form the sides of a rectangle.

5. A multi-axis piezoelectric positioner according to claim 4, further comprising a fourth releasable clamp mechanism (63D), wherein the first, second, third and fourth releasable clamp mechanisms are arranged to act at corresponding ones of the four corners of the rectangle.

6. A multi-axis, piezoelectric positioner according to claim 4 or claim 5, further comprising comer-pieces (64A-D) at the corners of the rectangle.

7. A multi-axis piezoelectric positioner according to any one of the preceding claims, wherein the piezoelectric actuators each comprise a piezoelectric element (162) mounted in a flexure member (164) and arranged such that the piezoelectric element may be driven to expand in a direction substantially parallel to the plane, thus causing the flexure member to contract in a direction substantially perpendicular to the plane and release the clamping force.

8. A multi-axis piezoelectric positioner according to any one of the preceding claims, wherein the releasable clamping mechanisms each comprise a further piezoelectric actuator configured to cooperate with the first mentioned piezoelectric actuator so as to move the moveable part relative to the fixed part along a direction perpendicular to the plane while maintaining a clamping force.

9. A multi-axis piezoelectric positioner according to any one of the preceding claims, wherein the moveable part further comprises a carrier (26, 68, 127) coupled to the piezoelectric device and extending along a direction perpendicular to the plane, the carrier having a mounting face to which an object to be positioned may be attached.

10. A multi-axis piezoelectric positioner according to claim 9, wherein the moveable part comprises a second piezoelectric device (126) spaced from the first mentioned piezoelectric device (124) along a direction perpendicular to the plane by an adjustable spacer (146A-C) such that the separation between the first mentioned and second piezoelectric devices is changeable, the carrier being held by the first mentioned and second piezoelectric devices such that it may be moved in a direction perpendicular to the plane by changing the separation of the first mentioned and second piezoelectric devices as the carrier is selectively held and released by the first mentioned and second piezoelectric devices.

11. A multi-axis piezoelectric positioner according to claim 9, wherein the carrier comprises a one-axis positioner such that the position of the mounting face may be positioned along an axis perpendicular to the plane.

12. A multi-axis piezoelectric positioner according to any one of the preceding claims, further comprising a controller (18, 58,118) configured to activate the piezoelectric device and the releasable clamp mechanisms in a pre-determined sequence to position the moveable part relative to the fixed part.

13. A multi-axis piezoelectric positioner according to any one of the preceding claims, further comprising a controller (18, 58,118) configured to activate the piezoelectric device and the releasable clamping mechanisms in response to a feedback signal to position the moveable part relative to the fixed part.

## Patentansprüche

1. Piezoelektrischer Mehrachsenpositionierer (16, 56, 116), der aufweist:
ein festes Teil (20, 60, 120),
ein bewegliches Teil (22, 62, 122), das in einer Ebene relativ zu dem festen Teil positionierbar ist, wobei das bewegbare Teil eine piezoelektrische Vorrichtung (24, 66, 124; 126) aufweist, die derart betreibbar ist, daß sie sich innerhalb der Ebene erweitert und zusammenzieht, und
erste, zweite und dritte lösbare Klemmechanismen (28A-C, 63A-C, 128A-C), die betreibbar sind, um selektiv das beweglich Teil an dem festen Teil an entsprechenden ersten, zweiten und dritten Orten (A, B, C) zu klemmen, so daß das bewegliche Teil bewegt werden kann innerhalb der Ebene durch das ausgewählte Aktivieren eines der lösbaren Klemmechanismen, wenn die piezoelektrische Vorrichtung sich ausdehnt oder zusammenzieht, wobei die lösbaren Klemmechanismen jeweils einen piezoelektrischen Betätiger (32A, 42A, 132A; 146A; 152A) aufweisen, der betreibbar ist, um eine Klemmkraft auf das bewegliche Teil aufzubringen entlang einer Richtung senkrecht zur Ebene.

2. Piezoelektrischer Mehrachsenpositionierer nach Anspruch 1, wobei die piezoelektrische Vorrichtung aus einem einzelnen piezoelektrischen Element besteht.

3. Piezoelektrischer Mehrachsenpositionierer nach Anspruch 1, bei dem die piezoelektrische Vorrichtung eine Mehrzahl von piezoelektrischen Elementen aufweist.

4. Piezoelektrischer Mehrachsenpositionierer nach Anspruch1, bei dem die piezoelektrische Vorrichtung vier piezoelektrische Elemente aufweist, die angeordnet sind, daß sie die Seiten eines Rechteckes bilden.

5. Piezoelektrischer Mehrachsenpositionierer nach Anspruch 4, der weiterhin aufweist einen vierten lösbaren Klemmechanismus (63D), wobei der erste, zweite, dritte und vierte lösbare Klemmechanismus angeordnet sind, so daß sie auf jeweils eine der vier Ecken des Rechteckes einwirken.

6. Piezoelektrischer Mehrachsenpositionierer nach Anspruch 4 oder Anspruch 5, der weiterhin Eckstücke (64A-D) an den Ecken des Rechteckes aufweist.

7. Piezoelektrischer Mehrachsenpositionierer nach einem der vorherigen Ansprüche, wobei die piezoelektrischen Betätiger jeweils ein piezoelektrisches Element (162) aufweisen, das in einem Biegeelement (164) montiert ist und derart angeordnet ist, daß das piezoelektrische Element angetrieben werden kann, um in einer Richtung im wesentlichen parallel zur Ebene zu expandieren, was somit veranlaßt, daß sich das Biegeelement in einer Richtung im wesentlichen senkrecht zur Ebene kontrahiert und die Klemmkraft löst.

8. Piezoelektrischer Mehrachsenpositionierer nach einem der vorherigen Ansprüche, bei dem die lösbaren Klemmechanismen jeweils einen weiteren piezoelektrischen Betätiger aufweisen, die konfiguriert sind, um mit den erst erwähnten piezoelektrischen Betätigern zusammenzuwirken, um das bewegliche Teil relativ zu dem festen Teil entlang einer Richtung senkrecht zur Ebene zu bewegen, während eine Klemmkraft beibehalten wird.

9. Piezoelektrischer Mehrachsenpositionierer nach einem der vorherigen Ansprüche, wobei das bewegliche Teil weiterhin aufweist einen Träger (26, 68, 127), der mit der piezoelektrischen Vorrichtung verbunden ist und sich entlang einer Richtung rechtwinklig zur Ebene erweitert, wobei der Träger eine Montagefläche hat, an die ein zu positionierendes Objekt befestigt werden kann.

10. Piezoelektrischer Mehrachsenpositionierer nach Anspruch 9, wobei das bewegliche Teil eine zweite piezoelektrische Vorrichtung (126) aufweist, die entlang einer Richtung senkrecht zur Ebene durch ein einstellbares Abstandsstück (146A-C) von der erst erwähnten piezoelektrischen Vorrichtung (124) beabstandet ist, so daß der Abstand zwischen dem erst erwähnten und der zweiten piezoelektrischen Vorrichtung veränderbar ist, wobei der Träger von der erst erwähnten und der zweiten piezoelektrischen Vorrichtung gehalten wird, so daß er in einer Richtung senkrecht zur Ebene bewegt werden kann durch Verändern des Abstandes der zuerst erwähnten und der zweiten piezoelektrischen Vorrichtung, wenn der Träger selektiv gehalten und losgelassen wird durch die erst erwähnte und die zweite piezoelektrische Vorrichtung.

11. Piezoelektrischer Mehrachsenpositionierer nach Anspruch 9, wobei der Träger einen Einachsenpositionierer aufweist, so daß die Position der Montagefläche entlang einer Achse senkrecht zur Ebene positioniert werden kann.

12. Piezoelektrischer Mehrachsenpositionierer nach einem der vorherigen Ansprüche, der weiterhin aufweist einen Controller (18, 58, 118), der konfiguriert ist, um die piezoelektrische Vorrichtung und den lösbaren Klemmechanismus in einer vorbestimmten Sequenz zu aktivieren, um das bewegliche Teil relativ zu dem festen Teil zu positionieren.

13. Piezoelektrischer Mehrachsenpositionierer nach einem der vorherigen Ansprüche, der weiterhin aufweist einen Controller (18, 58, 118), der konfiguriert ist, um die piezoelektrische Vorrichtung und die lösbaren Klemmechanismen in Antwort auf ein Feedbacksignal zu aktivieren, um das bewegliche Teil relativ zu dem festen Teil zu positionieren.

## Revendications

1. Positionneur piézoélectrique multiaxe (16, 56, 116) comportant :
une partie fixe (20, 60, 120) ;
une partie mobile (22, 62, 122) pouvant être positionnée dans un plan par rapport à la partie fixe, la partie mobile comportant un dispositif piézoélectrique (24, 66, 124 ; 126) pouvant être mis en oeuvre pour se dilater et se contracter dans le plan ; et
des premier, deuxième et troisième mécanismes de serrage libérable (28A-C, 63A-C, 128A-C) pouvant être mis en oeuvre pour serrer sélectivement la partie mobile sur la partie fixe dans des première, deuxième et troisième positions correspondantes (A, B, C) de façon que la partie mobile puisse être déplacée dans le plan par une activation choisie de certains des mécanismes de serrage libérable lorsque le dispositif piézoélectrique est dilaté ou contracté, les mécanismes de serrage libérable comportant chacun un actionneur piézoélectrique (32A, 42A, 132A ; 146A ; 152A) pouvant être mis en oeuvre pour appliquer une force de serrage à la partie mobile suivant une direction perpendiculaire au plan.

2. Positionneur piézoélectrique multiaxe selon la revendication 1, dans lequel le dispositif piézoélectrique consiste en un élément piézoélectrique unique.

3. Positionneur piézoélectrique multiaxe selon la revendication 1, dans lequel le dispositif piézoélectrique comprend plusieurs éléments piézoélectriques.

4. Positionneur piézoélectrique multiaxe selon la revendication 1, dans lequel le dispositif piézoélectrique comprend quatre éléments piézoélectriques agencés de façon à former les côtés d'un rectangle.

5. Positionneur piézoélectrique multiaxe selon la revendication 4, comportant en outre un quatrième mécanisme de serrage libérable (63D), dans lequel les premier, deuxième, troisième et quatrième mécanismes de serrage libérable sont agencés de façon à agir en certains, correspondants, des quatre angles du rectangle.

6. Positionneur piézoélectrique multiaxe selon la revendication 4 ou la revendication 5, comportant en outre des pièces d'angle (64A-D) aux angles du rectangle.

7. Positionneur piézoélectrique multiaxe selon l'une quelconque des revendications précédentes, dans lequel les actionneurs piézoélectriques comprennent chacun un élément piézoélectrique (162) monté sur un élément de flexion (164) et agencé de façon que l'élément piézoélectrique puisse être attaqué pour se dilater dans une direction sensiblement parallèle au plan, amenant ainsi l'élément de flexion à se contracter dans une direction sensiblement perpendiculaire au plan et à libérer la force de serrage.

8. Positionneur piézoélectrique multiaxe selon l'une quelconque des revendications précédentes, dans lequel les mécanismes de serrage libérable comprennent chacun un autre actionneur piézoélectrique configuré pour coopérer avec l'actionneur piézoélectrique mentionné en premier afin de déplacer la partie mobile par rapport à la partie fixe suivant une direction perpendiculaire au plan tout en maintenant une force de serrage.

9. Positionneur piézoélectrique multiaxe selon l'une quelconque des revendications précédentes, dans lequel la partie mobile comporte en outre un support (26, 68, 127) accouplé au dispositif piézoélectrique et s'étendant suivant une direction perpendiculaire au plan, le support ayant une face de montage sur laquelle un objet devant être positionné peut être fixé.

10. Positionneur piézoélectrique multiaxe selon la revendication 9, dans lequel la partie mobile comporte un second dispositif piézoélectrique (126) espacé du dispositif piézoélectrique (124) mentionné en premier suivant une direction perpendiculaire au plan par une entretoise réglable (146A-C) telle que la séparation entre le dispositif piézoélectrique mentionné en premier et le second dispositif piézoélectrique puisse varier, le support étant maintenu par le dispositif piézoélectrique mentionné en premier et le second dispositif piézoélectrique de manière qu'il puisse être déplacé dans une direction perpendiculaire au plan en faisant varier la séparation entre le dispositif piézoélectrique mentionné en premier et le second dispositif piézoélectrique pendant que le support est sélectivement maintenu et libéré par le dispositif piézoélectrique mentionné en premier et le second dispositif piézoélectrique.

11. Positionneur piézoélectrique multiaxe selon la revendication 9, dans lequel le support comprend un positionneur à un seul axe tel que la position de la face de montage peut être réglée le long d'un axe perpendiculaire au plan.

12. Positionneur piézoélectrique multiaxe selon l'une quelconque des revendications précédentes, comportant en outre une unité de commande (18, 58, 118) configurée pour activer le dispositif piézoélectrique et les mécanismes de serrage libérable selon une séquence prédéterminée afin de positionner la partie mobile par rapport à la partie fixe.

13. Positionneur piézoélectrique multiaxe selon l'une quelconque des revendications précédentes, comportant en outre une unité de commande (18, 58, 118) configurée pour activer le dispositif piézoélectrique et les mécanismes de serrage libérable en réponse à un signal de rétroaction pour positionner la partie mobile par rapport à la partie fixe.
